# EUROPEAN PATENT APPLICATION

(11) **EP 4 651 613 A1**
(43) Date of publication of application: **19.11.2025**
(21) Application number: 23915303.4
(22) Date of filing: 10.01.2023
(51) Int. Cl.: H04W 74/08

(54) **METHOD AND APPARATUS FOR DETERMINING RANDOM ACCESS RESOURCE, AND STORAGE MEDIUM**

(71) Applicant: Beijing Xiaomi Mobile Software Co., Ltd., Beijing 100085 (CN)
(72) Inventor: LIU, Xiaofei, Beijing 100085 (CN)
(74) Representative: Stöckeler, Ferdinand
(86) International application number: PCT/CN2023/071737
(87) International publication number: WO 2024/148527

(57) **Abstract**

Provided in the present disclosure are a method and apparatus for determining a random access resource, and a storage medium. The method for determining a random access resource partition comprises: determining a first random access resource partition, wherein the first random access resource partition comprises one or more random access resource partitions; and determining from the first random access resource partition a target random access resource partition for the current random access. In the present disclosure, in a random access process triggered on the basis of a network slice, a terminal can uniquely determine one target random access resource partition for the current random access, thus improving the reliability of the random access process which is triggered by the network slice.

## Description

### TECHNICAL FIELD

The disclosure relates to the field of communication technology, and in particular to a method and an apparatus for determining a random access resource, and a storage medium.

### BACKGROUND

Currently, a terminal selects a set of random access resources for a random access procedure based on granularity of per feature. For the random access procedure triggered based on a network slice access stratum group (NSAG), since a network device configures the random access resource based on granularity of per NSAG, according to existing procedures, one or more NSAGs ultimately determined by the terminal may correspond to a plurality of sets of random access resources, and the terminal cannot determine which set of random access resources to use for random access. Accordingly, the random access procedure triggered based on the NSAG needs to be optimized.

### SUMMARY

To overcome problems existing in related technologies, the disclosure provides a method and an apparatus for determining a random access resource, and a storage medium.

According to a first aspect of the disclosure, a method for determining a random access resource is provided. The method is performed by a terminal, including: determining a first set of random access resources; and determining one target set of random access resources for a current random access from the first set of random access resources.

Optionally, determining the first set of random access resources includes: determining a set of random access resources associated with a first network slice access stratum group (NSAG) as the first set of random access resources, in which the first NSAG includes one or more NSAGs determined by a radio resource control (RRC) layer and provided to a media access control (MAC) layer.

Optionally, determining the first set of random access resources includes: determining the first set of random access resources based on random access resource set configuration information sent by a first network device, in which the random access resource set configuration information satisfies at least one of: one set of random access resources being associated with one NSAG; one set of random access resources being associated with more than one NSAG, in which the more than one NSAG is not determined by an RRC layer and provided to a MAC layer at the same time; or one NSAG being associated with one set of random access resources.

Optionally, the number of first sets of random access resources is plural, and determining the one target set of random access resources for the current random access based on the first set of random access resources includes at least one of: determining the target set of random access resources from the first sets of random access resources based on a terminal policy; determining the target set of random access resources from the first sets of random access resources based on indication information sent by a first network device; or determining the target set of random access resources from the first sets of random access resources based on a specification.

Optionally, the target set of random access resources satisfies at least one of: the target set of random access resources being associated with a largest number of NSAGs; the target set of random access resources being associated only with a first NSAG, in which the first NSAG includes one or more NSAGs determined by an RRC layer and provided to a MAC layer; or a priority of an NSAG associated with the target set of random access resources satisfying a preset condition.

Optionally, the method further includes: determining the priority based on the indication information sent by the first network device, in which the indication information is configured to determine the target set of random access resources from the first sets of random access resources.

According to a second aspect of the disclosure, a method for determining a random access resource is provided. The method is performed by a first network device, including: sending first information to a terminal, in which the first information is configured for the terminal to determine one first set of random access resources or to determine one target set of random access resources for a current random access from first sets of random access resources.

Optionally, the first information includes random access resource set configuration information, and the random access resource set configuration information is configured for the terminal to determine the one first set of random access resources, in which the random access resource set configuration information satisfies at least one of: one set of random access resources being associated with one NSAG; one set of random access resource s being associated with more than one NSAG, in which the more than one NSAG is not determined by an RRC layer and provided to a MAC layer at the same time; or one NSAG being associated with one set of random access resources.

Optionally, the method further includes: receiving information of a network slice sent by a second network device; and determining the plurality of NSAGs based on the information of the network slice.

Optionally, the information of the network slice includes at least one of: a mapping relationship between single network slice selection assistance information (S-NSSAI) and an NSAG; an NSAG priority; or area information corresponding to the mapping relationship, in which the area information includes at least a tracking area identity (TAI).

Optionally, the network slice includes at least one of: a network slice that the terminal is allowed to access an NSAG; or network slices that cannot be simultaneously allowed for registration and use.

Optionally, the first information includes indication information, and the indication information is configured for the terminal to determine the target set of random access resources from the first set of random access resources.

According to a third aspect of the disclosure, a method for determining a random access resource is provided. The method is performed by a second network device, including: sending information of a network slice to a first network device, in which the information of the network slice is configured for the first network device to determine a plurality of NSAGs associated with one set of random access resources, the plurality of NSAGs are not determined by an RRC layer of a terminal and provided to a MAC layer at the same time.

Optionally, the information of the network slice includes at least one of: a mapping relationship between S-NSSAI and an NSAG; an NSAG priority; or area information corresponding to the mapping relationship, in which the area information includes at least a TAI.

Optionally, the network slice includes at least one of: a network slice that the terminal is allowed to access an NSAG; or network slices that cannot be simultaneously allowed for registration and use.

According to a fourth aspect of the disclosure, an apparatus for determining a random access resource is provided. The apparatus is applied to a terminal, including: a first determining module, configured to determine a first set of random access resources, in which the first set of random access resources includes one or more sets of random access resources; and a second determining module, configured to determine one target set of random access resources for a current random access from the first set of random access resources.

Optionally, the first determining module includes a first determining submodule, configured to determine a set of random access resources associated with a first NSAG as the first set of random access resources, in which the first NSAG includes one or more NSAGs determined by an RRC layer and provided to a MAC layer.

Optionally, the first determining module includes a second determining submodule, configured to determine the first set of random access resources based on random access resource set configuration information sent by a first network device, in which the random access resource set configuration information satisfies at least one of: one set of random access resources being associated with one NSAG; one set of random access resources being associated with more than one NSAG, in which the more than one NSAG is not determined by an RRC layer and provided to a MAC layer at the same time; or one NSAG being associated with one set of random access resources.

Optionally, the number of first sets of random access resources is plural, and the first determining module includes at least one of: a third determining submodule, configured to determine the target set of random access resources from the first sets of random access resources based on a terminal policy; a fourth determining submodule, configured to determine the target set of random access resources from the first sets of random access resources based on indication information sent by a first network device; or a fifth determining submodule, configured to determine the target set of random access resources from the first sets of random access resources based on a specification.

Optionally, the target set of random access resources satisfies at least one of: the target set of random access resources being associated with a largest number of NSAGs; the target set of random access resources being associated only with a first NSAG, in which the first NSAG includes one or more NSAGs determined by an RRC layer and provided to a MAC layer; the target set of random access resources being associated only with a first NSAG suitable for random access, in which the first NSAG is determined by an RRC layer and provided to a MAC layer; or a priority of an NSAG associated with the target set of random access resources satisfying a preset condition.

Optionally, the apparatus further includes a fourth determining module, configured to determine the priority based on the indication information sent by the first network device, in which the indication information is configured to determine the target set of random access resources from the first sets of random access resources.

According to a fifth aspect of the disclosure, an apparatus for determining a random access resource is provided. The apparatus is applied to a first network device, including: a first sending module, configured to send first information to a terminal, in which the first information is configured for the terminal to determine one first set of random access resources or to determine one target set of random access resources for a current random access from first sets of random access resources.

Optionally, the first information includes random access resource set configuration information, and the random access resource set configuration information is configured for the terminal to determine the first set of random access resources, in which the random access resource set configuration information satisfies at least one of: one set of random access resources being associated with one NSAG; one set of random access resources being associated with more than one NSAG, in which the more than one NSAG is not determined by an RRC layer and provided to a MAC layer at the same time; or one NSAG being associated with one set of random access resources.

Optionally, the apparatus further includes a receiving module, configured to receive information of a network slice sent by a second network device; and a third determining module, configured to determine the plurality of NSAGs based on the information of the network slice.

Optionally, the information of the network slice includes at least one of: a mapping relationship between S-NSSA and an NSAG; an NSAG priority; or area information corresponding to the mapping relationship, in which the area information includes at least a TAI.

Optionally, the network slice includes at least one of: a network slice that the terminal is allowed to access an NSAG; or network slices that cannot be simultaneously allowed for registration and use.

Optionally, the first information includes indication information, and the indication information is configured for the terminal to determine the target set of random access resources from the first set of random access resources.

According to a sixth aspect of the disclosure, an apparatus for determining a random access resource is provided. The apparatus is applied to a second network device, including: a second sending module, configured to send information of a network slice to a first network device, in which the information of the network slice is configured for the first network device to determine more than one NSAG associated with one set of random access resources, the more than one NSAG is not determined by an RRC layer of a terminal and provided to a MAC layer at the same time.

Optionally, the information of the network slice includes at least one of: a mapping relationship between S-NSSAI and an NSAG; an NSAG priority; or area information corresponding to the mapping relationship, in which the area information includes at least a TAI.

Optionally, the network slice includes at least one of: a network slice that the terminal is allowed to access an NSAG; or network slices that cannot be simultaneously allowed for registration and use.

According to a seventh aspect of the disclosure, a computer-readable storage medium is provided. The computer-readable storage medium has stored a computer program that implements any method for determining a random access resource on the terminal side.

According to an eighth aspect of the disclosure, a computer-readable storage medium is provided. The computer-readable storage medium has stored a computer program that implements any method for determining a random access resource on the first network device side or on the second network device side.

According to a ninth aspect of the disclosure, an apparatus for determining a random access resource is provided. The apparatus for determining a random access resource includes: a processor; and a memory storing processor executable instructions, in which the processor is configured to implement any method for determining a random access resource on the terminal side.

According to a tenth aspect of the disclosure, an apparatus for determining a random access resource is provided. The apparatus for determining a random access resource includes: a processor; and a memory storing processor executable instructions, in which the processor is configured to implement any method for determining a random access resource on the first network device side or on the second network device side.

Technical solutions provided in embodiments of the disclosure may include the following beneficial effects.

In the disclosure, in a random access procedure triggered based on a network slice, the terminal may uniquely determine one target set of random access resources for the current random access, thereby improving reliability of the random access procedure triggered based on the network slice.

It should be understood that the above general description and the following detailed description are only exemplary and explanatory, and do not limit embodiments of the disclosure.

### BRIEF DESCRIPTION OF THE DRAWINGS

The figures herein are incorporated into the specification and constitute a part of the specification, showing that they conform to the embodiments of the disclosure, and are used together with the specification to explain the principles of the embodiments of the disclosure.
FIG. 1 is a schematic diagram illustrating an architecture of a system for determining a random access resource according to an embodiment.
FIG. 2 is a flow chart illustrating a method for determining a random access resource according to an embodiment.
FIG. 3 is a flow chart illustrating a method for determining a random access resource according to an embodiment.
FIG. 4A is a flow chart illustrating a method for determining a random access resource according to an embodiment.
FIG. 4B is a flow chart illustrating a method for determining a random access resource according to an embodiment.
FIG. 5 is a flow chart illustrating a method for determining a random access resource according to an embodiment.
FIG. 6 is a flow chart illustrating a method for determining a random access resource according to an embodiment.
FIG. 7 is a flow chart illustrating a method for determining a random access resource according to an embodiment.
FIG. 8 is a block diagram illustrating an apparatus for determining a random access resource according to an embodiment.
FIG. 9 is a block diagram illustrating an apparatus for determining a random access resource according to an embodiment.
FIG. 10 is a block diagram illustrating an apparatus for determining a random access resource according to an embodiment.
FIG. 11 is a block diagram illustrating an apparatus for determining a random access resource according to an embodiment.
FIG. 12 is a block diagram illustrating an apparatus for determining a random access resource according to an embodiment.

### DETAILED DESCRIPTION

Reference will now be made in detail to exemplary embodiments, examples of which are illustrated in the accompanying drawings. The following description refers to the accompanying drawings in which the same numbers in different drawings represent the same or similar elements unless otherwise represented. The implementations set forth in the following description of exemplary embodiments do not represent all implementations consistent with the present disclosure. Instead, they are merely examples of apparatuses and methods consistent with aspects related to the present disclosure as recited in the appended claims.

The terms used in the embodiments of the present disclosure are solely for the purpose of describing a particular embodiment and are not intended to limit the embodiments of the present disclosure. The terms "a" and "the" in the singular form used in the embodiments and claims of the disclosure are also intended to include the plural form, unless the context clearly indicates other meaning. It should also be understood that the term "and/or" as used herein refers to any or all possible combinations of one or more associated listed items.

It should be understood that although the terms first, second, third, etc. may be used to describe various information in the embodiments of the present disclosure, such information should not be limited to these terms. These terms are used only to distinguish information in the same type from one another. For example, without leaving the scope of the embodiments of the present disclosure, the first information may also be referred to as the second information, and likewise the second information may be referred to as the first information. Depending on the context, the words "if" and "in a case" used here may be interpreted as "when" or "in response to determining".

In Release 17 (R17), to implement early identification of R17 features by a network device so as to provide a random access resource configuration corresponding to the R17 features to a terminal, for example, the network device may configure a corresponding set of random access resources for a plurality of features and/or at least one feature combination of the terminal. The features include but are not limited to at least one of: small data transmission (SDT); coverage enhancement (CE); reduced capability (REDCAP); radio access network (RAN) slicing.

The terminal initiates a random access based on resources corresponding to the set of random access resources configured by the network device. The network device implements early identification of the feature and/or feature combination of the terminal by identifying the feature and/or the feature combination corresponding to the resource selected by the terminal.

In an example, the terminal first determines the feature and/or feature combination triggering the current random access, and determines, based on the random access resource set configuration configured by the network device, whether there is a candidate set of random access resources corresponding to the feature and/or feature combination triggering the random access. If there is no candidate set of random access resources, the terminal selects a legacy random access resource. The legacy random access resource refers to a random access resource not associated with any feature and/or feature combination. If there is one candidate set of random access resources, resources included in the candidate set of random access resources are selected. If there are a plurality of candidate sets of random access resources, the terminal may perform selection of a set of random access resources based on a feature priority. The feature priority may be configured by the network device.

Limited by the random access resource and an actual network deployment, the network device may not provide corresponding set of random access resources for all feature combinations, that is, there are some feature combinations for which no corresponding set of random access resources can be found. In this case, a media access control (MAC) layer of the terminal performs selection of the set of random access resources based on the feature priority configured by the network device, so as to preferentially ensure that a corresponding set of random access resources can be found for a high-priority feature. That is, the set of random access resources finally selected by the terminal may not necessarily support all features and/or feature combinations suitable for the current random access procedure. In addition, for the feature "RAN slicing", the network device configures the set of random access resources according to granularity of per network slice access stratum group (NSAG).

In R17, to avoid security and signaling load problems caused by single network slice selection assistance information (S-NSSAI) broadcast in a broadcast signaling, an NSAG mechanism is introduced. For ease of description, the disclosure may refer to the network slice access stratum group as network slice group.

From a network device side, a base station may provide an NSAG and an NSAG configuration supported by the base station to the terminal, for the terminal to perform network slice-based cell reselection and implement enhancement of the random access resource configuration. Meanwhile, a core network device may send NSAG information and S-NSSAI to the terminal via a non-access stratum (NAS) signaling, for the terminal to map required S-NSSAI to the NSAG, and perform the cell reselection and the random access procedure based on the NSAG configuration. The NSAG information includes but is not limited to a mapping relationship between the S-NSSAI and an NSAG, an NSAG priority, and area information corresponding to the mapping relationship, in which the area information includes but is not limited to a tracking area identity (TAI).

From the terminal side, the terminal receives S-NSSAI(S) and NSAG information sent by the core network device via a NAS signaling, and a NAS layer of the terminal passes information of one or more network slices (and/or information of a network slice group) to an access stratum (AS), for the AS to determine an NSAG identifier for cell selection and reselection.

In an example, in a random access procedure triggered based on the network slice, a radio resource control (RRC) layer of the terminal determines NSAGs that are related to S-NSSAI triggering the random access provided by a higher layer and that are broadcast in a system message (for example, system information block 1 (SIB1)) and selects an NSAG with a highest priority for the current random access procedure from the NSAGs, based on the S-NSSAI triggering the random access, the mapping relationship between the S-NSSAI and the NSAGs, and NSAG priorities. However, since an authentication management function (AMF) may configure NSAGs with an equal priority, there may be a plurality of NSAGs with the highest-priority, that is, one or more NSAGs may be finally determined, by the RRC layer of the terminal, for the random access procedure.

Currently, the terminal determines candidate sets of random access resources and finally selects a set of random access resources for a random access procedure, based on granularity of per feature. For a random access procedure triggered based on the NSAG, a corresponding random access resource configuration is determined based on granularity of per NSAG.

Thus, regardless of whether the number of NSAGs with the highest NSAG priority selected by the RRC layer of the terminal and provided to the MAC layer is one or more, for an NSAG-triggered random access procedure, there may be a case where a plurality of sets of random access resources are finally determined for the random access procedure. Clearly, the process of determining a random access resource needs to be optimized.

For example, it is assumed that the NSAG determined by the RRC layer of the terminal and provided to the MAC layer is NSAG1, and the feature triggering the random access procedure includes NSAG#1 and CE.

The random access resource set configuration broadcast by the network device via a system message, for example, SIB1, includes: a set of random access resources #1 being associated with the NSAG#1; and a set of random access resources #2 being associated with the NSAG#1 and the NSAG#2.

The terminal determines, based on the feature (NSAG#1 and CE) triggering the random access procedure, that the candidate sets of random access resources include the set of random access resources #1 and the set of random access resources #2. Then, the terminal further uniquely determines a target set of random access resources for the random access procedure based on a feature priority. Assuming that the NSAG#1 has a higher priority, since both the set of random access resources #1 and the set of random access resources #2 are associated with the NSAG#1, the terminal considers that both the set of random access resources #1 and the set of random access resources #2 may be used as the target set of random access resources, so that it is impossible to determine a unique target set of random access resources based on the feature priority.

For another example, it is assumed that NSAGs determined by the RRC layer and provided to the MAC layer include NSAG#1 and NSAG#2, and the feature triggering the random access includes the NSAG#1 and the NSAG#2. The random access resource set configuration broadcast by the network device via a system message, for example, SIB1, includes: the set of random access resources #1 being associated with the NSAG#1; the set of random access resources #2 being associated with the NSAG#2.

The terminal determines, based on the feature (the NSAG#1 and the NSAG#2) triggering the random access procedure, that candidate sets of random access resources include the set of random access resources #1 and the set of random access resources #2. Assuming that the NSAG#1 and the NSAG#2 have the same NSAG priority, the terminal cannot further select a unique target set of random access resources for the current random access procedure based on the feature priority.

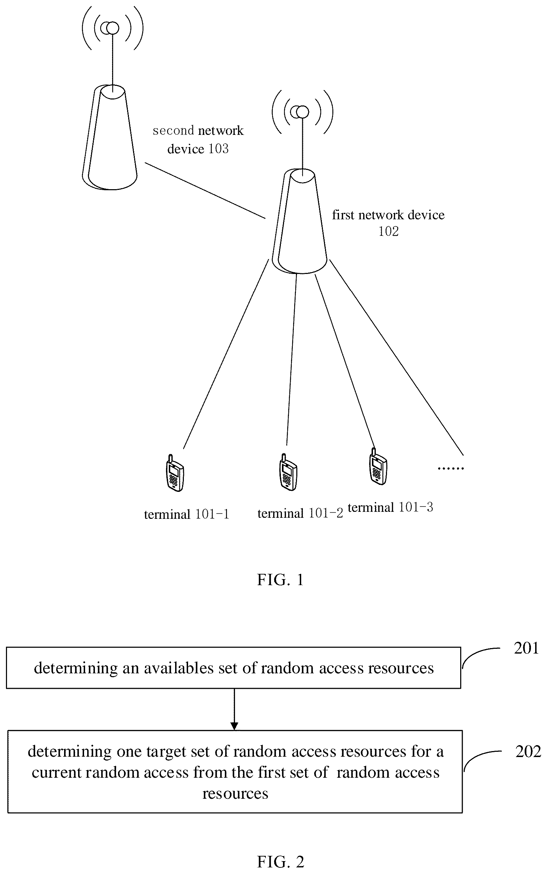

To solve the above technical problems, the disclosure provides a method and an apparatus for determining a random access resource, and a storage medium as follows. As shown in FIG. 1, which is a schematic diagram illustrating a network architecture applicable to the solution of the disclosure. The network in the disclosure may be a 4G network, a 5G network, a 6G network or a future communication network, which is not limited in the disclosure. The network architecture includes a terminal 101, a first network device 102 and a second network device 103.

The terminal 101 (including 101-1, 101-2, 101-3... in FIG. 1) may be a smartphone, a desktop computer, a laptop, a tablet, etc., which is not limited in the disclosure.

The first network device 102 includes but is not limited to a base station, an access network device, etc. The base station may be a 4G base station, a 5G base station or a future 6G base station, and the access network device may be a 4G access network device, a 5G access network device or a future 6G access network device, which is not limited in the disclosure. Optionally, the first network device 102 may further include a core network device, such as an AMF.

The second network device 103 includes but is not limited to a base station, an access network device, etc. The base station may be a 4G base station, a 5G base station or a future 6G base station, and the access network device may be a 4G access network device, a 5G access network device or a future 6G access network device, which is not limited in the disclosure. Optionally, the second network device 103 may further include a core network device, such as an AMF.

In an embodiment of the disclosure, the first network device 102 and the second network device 103 may be network devices of the same type or different types, for example both of them are base stations, both are core network devices, or one is a base station and the other one is a core network device. Optionally, when the first network device 102 and the second network device 103 are network devices of the same type, they may be the same device or different devices, which is not limited in the disclosure.

In some alternative embodiments, the terminal 101 may determine a first set of random access resources.

The first set of random access resources refers to a candidate set of random access resources for a random access.

In an example, the terminal 101 may determine all sets of random access resources associated with a first NSAG to belong to the first set of random access resources.

The first NSAG includes one or more NSAGs determined by an RRC layer of the terminal and provided to a MAC layer.

Further, after determining the first set of random access resources, the terminal may determine a target set of random access resources based on the related art. The method for determining the target set of random access resources includes but is not limited to directly determining the first set of random access resources as the target set of random access resources.

In the disclosure, the target set of random access resources is a set of random access resources used for the current random access. It may be understood that the terminal determines a configuration for initiating the random access based on the target set of random access resources, including but not limited to using the resource in the target set of random access resources to initiate the random access.

In another example, the terminal 101 may determine the first set of random access resources based on random access resource set configuration information sent by the first network device 102.

It should be noted that the random access resource set configuration information may satisfy at least one of: one set of random access resources being associated with an NSAG; one set of random access resources being associated with a plurality of NSAGs, in which the plurality of NSAGs are not determined by an RRC layer and provided to a MAC layer at the same time; or one NSAG being associated with one set of random access resources.

The random access resource set configuration information will be introduced in subsequent embodiments and is not described here.

Further, after determining the first set of random access resources, the terminal may determine the target set of random access resources based on the related art. The method for determining the target set of random access resources includes but is not limited to directly determining the first set of random access resources as the target set of random access resources.

In another example, the terminal may determine the first set of random access resources based on the above technical solution. For example, it is assumed that NSAGs determined and provided by the RRC layer include NSAG#1 and NSAG#2, and the feature triggering the random access includes the NSAG#1 and the NSAG#2. The random access resource set configuration broadcast by the network device via a system message, for example, SIB1, includes: the set of random access resources #1 being associated with the NSAG#1; and the set of random access resources #2 being associated with the NSAG#2.

Assuming that the NSAG#1 and the NSAG#2 have the same NSAG priority, the terminal 101 determines that the first set of random access resources include the set of random access resources #1 and the set of random access resources #2.

In this case, the terminal 101 determines a plurality of first sets of random access resources. The terminal 101 may determine one target set of random access resources for the current random access from the plurality of first sets of random access resources based on a terminal policy, based on indication information sent by the first network device, and/or based on a specification.

Correspondingly, the target set of random access resources satisfies at least one of: the target set of random access resources being associated with a largest number of NSAGs; the target set of random access resources being associated only with a first NSAG, in which the first NSAG includes one or more NSAGs determined by an RRC layer and provided to a MAC layer; or a priority of an NSAG associated with the target set of random access resources satisfying a preset condition.

The terminal may determine the priority based on the indication information sent by the first network device, in which the indication information is configured to determine the target set of random access resources from the plurality of first sets of random access resources.

Optionally, the priority may be configured for the terminal by the first network device through the indication information. The first network device includes but is not limited to a base station, a core network device, etc.

For example, the priority may be an NSAG priority in an existing mechanism, configured by the network device such as a base station or a core network device, and may include an equal NSAG priority.

For example, the priority may also be an additional priority configured by the first network device for the NSAG, which is different from the NSAG priority in the existing mechanism mentioned above. The additional priority may or may not include an equal NSAG priority, which is not limited in the disclosure.

For example, the priority may also be a priority of a set of random access resources.

The priority is not limited in the disclosure.

In some alternative embodiments, the first network device 102 may send first information to the terminal 101. The first information is configured for the terminal 101 to determine a first set of random access resources, in which the number of the first sets of random access resources is one. Alternatively, the first information is configured for the terminal 101 to determine one target set of random access resources for a current random access from a plurality of first sets of random access resources.

In an example, the first information may include random access resource set configuration information. The random access resource set configuration information may satisfy at least one of: one set of random access resources being associated with a single NSAG; one set of random access resources being associated with a plurality of NSAGs, in which the plurality of NSAGs are not determined by an RRC layer and provided to a MAC layer at the same time; or each NSAG being associated with one set of random access resources.

Correspondingly, the first information may be configured for the terminal to determine one first set of random access resources.

In another example, the first information may include indication information, configured for the terminal to determine one target set of random access resources for the current random access from the plurality of first sets of random access resources.

In some alternative embodiments, the second network device 103 may send information of a network slice to the first network device 102, configured for the first network device 102 to determine a plurality of NSAGs associated with one set of random access resources mentioned above, in which the plurality of NSAGs are not determined by an RRC layer of the terminal and provided to a MAC layer at the same time.

The information of the network slice includes at least one of: a mapping relationship between S-NSSAI and an NSAG; an NSAG priority; or area information corresponding to the mapping relationship, in which the area information includes at least a TAI.

The network slice includes at least one of: a network slice that the terminal is allowed to access an NSAG; or network slices that cannot be simultaneously allowed for registration and use.

In the above embodiments, in a random access procedure triggered based on the network slice, the terminal may uniquely determine one target set of random access resources for the current random access, thereby improving reliability of the random access procedure triggered based on the network slice.

In an embodiment of the disclosure, the target set of random access resources determined by the terminal and suitable for the random access may satisfy at least one of: meeting configuration requirements corresponding to as many features as possible; or providing more dedicated configurations for a certain feature as much as possible.

For example, in a case that the target set of random access resources meet the configuration requirements corresponding to as many features as possible, the target set of random access resources may involve a network slice, and the feature may adopt granularity of per NSAG. For example, the target set of random access resources may be a set of random access resources associated with a largest number of NSAGs.

For example, in a case that the target set of random access resources provides more dedicated configurations for the certain feature as much as possible, for example, the target set of random access resources may be a set of random access resources associated only with a first NSAG, in which the first NSAG includes one or more NSAGs determined by the RRC layer of the terminal and provided to the MAC layer.

For another example, the first network device configures a specific configuration for one or more features, and the target set of random access resources is associated with the one or more features having the specific configuration. For the network slice, the feature may adopt granularity of per NSAG, that is, the first network device configures the specific configuration for one or more NSAGs, and the target set of random access resources is associated with the one or more NSAGs having the specific configuration.

For another example, the target set of random access resources may also be a set of random access resources associated with an NSAG whose priority satisfies a preset condition.

Optionally, the priority may be determined by the indication information sent by the first network device, in which the indication information is configured for the terminal to determine the target sets of random access resource from the plurality of first sets of random access resources.

The priority may be configured for the terminal by the first network device through the indication information. The first network device includes but is not limited to a base station, a core network device, etc.

For example, the priority may be an NSAG priority in an existing mechanism, configured by the network device such as a base station or a core network device, and may include an equal NSAG priority.

For example, the priority may also be an additional priority configured by the first network device for the NSAG, which is different from the NSAG priority in the existing mechanism mentioned above. The additional priority may or may not include an equal NSAG priority, which is not limited in the disclosure.

For example, the priority may also be a priority of a set of random access resources.

Any method for the terminal to determine the target set of random access resources that satisfies at least one of the above conditions or other conditions should fall within the protection scope of this disclosure. The following first introduces the method for determining a random access resource provided in the disclosure from the terminal side.

Embodiments of the disclosure provide a method for determining a random access resource. As shown in FIG. 2, FIG. 2 is a flow chart illustrating a method for determining a random access resource according to an embodiment. The method may be performed by a terminal and may include the following steps 201 to 202.

At step 201, a first set of random access resources is determined.

In an embodiment of the disclosure, the first set of random access resources may be a candidate set of random access resources for a random access, specifically may be a set of random access resources corresponding to the feature and/or feature combination suitable for a current random access procedure. There may be one or more first sets of random access resources.

It should be noted that, for the terminal, the feature and/or feature combination visible to a MAC layer refer to the feature and/or feature combination suitable for the random access, and the feature and/or feature combination visible to an RRC layer refer to the feature and/or feature combination triggering the random access.

For example, the terminal determines the first set of random access resources based on random access resource set configuration sent by a first network device. The first network device includes but is not limited to a base station, an access network device, etc. The base station may be a 4G base station, a 5G base station or a future 6G base station, and the access network device may be a 4G access network device, a 5G access network device or a future 6G access network device, which is not limited in the disclosure. Optionally, the first network device 102 may further include a core network device, such as an AMF.

In an embodiment of the disclosure, the terminal may determine the first random access resource in any of the following methods.

Method 1: the terminal determines all sets of random access resources associated with a first NSAG to belong to the first set of random access resources.

In an embodiment of the disclosure, the first NSAG refers to an NSAG determined by an RRC layer of the terminal and provided to a MAC layer for performing selection of a random access resource. There may be one or more first NSAGs, which is not limited in the disclosure.

In Method 1, the terminal may determine one first set of random access resources.

For example, it is assumed that the first NSAGs include an NSAG#1 and an NSAG#2, and the NSAG#1 and the NSAG#2 have the same NSAG priority. The random access resource set configuration broadcast by the first network device via a system message, for example, SIB1, includes: a set of random access resources #1 being associated with the NSAG#1; a set of random access resources #2 being associated with the NSAG#1 and the NSAG#2.

According to Method 1 provided in the disclosure, there is one first NSAG associated with the set of random access resources #1 and there are two first NSAGs associated with the set of random access resources #2. The terminal determines the set of random access resources #2 associated with more first NSAGs as the first set of random access resources.

It should be noted that if there are three first NSAGs, and the random access resource set configuration broadcast by the first network device via a system message, for example, SIB1, is associated with at most two first NSAGs, the terminal may abandon determining the first set of random access resources based on all sets of random access resources associated with the first NSAG. Optionally, the terminal may determine the first set of random access resources based on a solution in the prior art, and then determine one target set of random access resources for the current random access through a subsequent step 202.

Alternatively, step 201 may include the following steps 201-1 and 201-2.

At step 201-1, a set of random access resources associated with the first NSAG is determined as a second set of random access resources.

In this step, the terminal determines all sets of random access resources associated with at least one of the first NSAGs to belong to the second sets of random access resources.

At step 201-2, a set of random access resources associated with a largest number of NSAGs among the first NSAGs is determined from the second sets of random access resources as the first set of random access resources.

For example, it is assumed that the first NSAGs include an NSAG#1, an NSAG#2, and an NSAG#3, and the NSAG#1 and the NSAG#2 have the same NSAG priority. The random access resource set configuration broadcast by the first network device via a system message, for example, SIB1, includes: the set of random access resources #1 being associated with the NSAG#1; the set of random access resources #2 being associated with the NSAG#1 and the NSAG#2.

The terminal determines the set of random access resources #1 and the set of random access resources #2 as the second sets of random access resources respectively. The terminal determines a set of random access resources associated with a largest number of first NSAGs among the second sets of random access resources as the set of random access resources #2, and determines the set of random access resources #2 as the first set of random access resources.

Method 2: the terminal determines the first set of random access resources based on random access resource set configuration information sent by the first network device.

In Method 2, the terminal may determine one first set of random access resources.

In an example, the random access resource set configuration information is associated with a single NSAG. That is, each set of random access resources configured by the random access resource set configuration information is associated with a single NSAG.

For example, the set of random access resources #1 is associated with the NSAG#1, the set of random access resources #2 is associated with the NSAG#2, and so on.

In another example, the random access resource set configuration information is associated with a plurality of NSAGs.

The plurality of NSAGs refer to the plurality of NSAGs that are not determined by the RRC layer of the terminal and provided to the MAC layer at the same time.

In an embodiment of the disclosure, a second network device may provide information of a network slice to the first network device. The information of the network slice is configured for the first network device to determine the plurality of NSAGs associated with one set of random access resources mentioned above. The second network device includes but is not limited to a base station, an access network device, etc. The base station may be a 4G base station, a 5G base station or a future 6G base station, and the access network device may be a 4G access network device, a 5G access network device or a future 6G access network device, which is not limited in the disclosure. Optionally, the second network device 103 may further include a core network device.

In an example, types of the first network device and the second network device may be the same or different.

For example, the first network device may be a base station, and the second network device may also be a base station. These two base stations may be the same or different, which is not limited in the disclosure.

For example, the first network device may be a core network device, and the second network device may be a base station.

For example, the first network device may be a base station, and the second network device may be a core network device.

For example, the first network device may be a core network device, and the second network device may be a core network device. These two core network devices may be core network devices of the same type or different types, for example both are AMFs, or one is an AMF and the other is a core network function device different from the AMF, which is not limited in the disclosure.

Optionally, the information of the network slice includes but is not limited to at least one of: a mapping relationship between S-NSSAI and an NSAG; an NSAG priority; or area information corresponding to the mapping relationship, in which the area information includes at least a TAI.

The NSAG priority here may be an NSAG priority in an existing mechanism, configured by a network device such as a base station or a core network device, and may include an equal NSAG priority.

The network slice includes but is not limited to at least one of: a network slice that the terminal is allowed to access an NSAG; or network slices that cannot be simultaneously allowed for registration and use. The NSAG here may be any NSAG, that is, the network slice includes a network slice that the terminal is allowed to access any NSAG.

The network slices that cannot be simultaneously allowed for registration and use refers to network slices that are not allowed to be registered and used simultaneously by the terminal as determined by the first network device within the same time period.

For example, the set of random access resources #1 is associated with the NSAG#1 and the NSAG#3. The NSAG#1 and the NSAG#3 are not allowed to be registered and used by the terminal simultaneously.

In another example, in the random access resource set configuration information, each NSAG is associated with one set of random access resources. It should be noted that this means that each NSAG is associated with only one set of random access resources.

For example, if the random access resource set configuration information includes the set of random access resources #1 being associated with the NSAG#1, then the random access resource set configuration information may not include a set of random access resources associated with the NSAG#1 and one or more other NSAGs. For example, the set of random access resources #2 associated with the NSAG#1 and the NSAG#2 is not included.

At step 202, one target set of random access resources for a current random access is determined from the first set of random access resources.

In an embodiment of the disclosure, if there is one first set of random access resources determined by the terminal based on the Method 1 or the Method 2, the terminal may directly determine the first set of random access resources as the target set of random access resources based on the related art.

In an example, if there are a plurality of first sets of random access resources determined by the terminal based on the Method 1 or the Method 2, the terminal may further determine the target set of random access resources.

In an embodiment of the disclosure, the target set of random access resources finally determined by the terminal may satisfy at least one of: the target set of random access resources being associated with a largest number of NSAGs; the target set of random access resources being associated only with a first NSAG, in which the first NSAG includes an NSAG determined by the RRC layer and provided to the MAC layer; or a priority of an NSAG associated with the target set of random access resources satisfying a preset condition.

In an example, among the plurality of first sets of random access resources, the terminal may determine the first set of random access resources associated with the largest number of NSAGs as the target set of random access resources.

In another example, among the plurality of first sets of random access resources, the terminal may determine the first set of random access resources associated only with the first NSAG as the target set of random access resources.

The first NSAG includes one or more NSAGs determined by the RRC layer and provided to the MAC layer.

In another example, among the plurality of first sets of random access resources, the terminal may determine the first set of random access resources as the target set of random access resources, in which a priority of an NSAG associated with the first set of random access resources satisfies the preset condition.

The preset condition here may be that a priority corresponding to the first set of random access resources is higher than priorities corresponding to other first sets of random access resources.

The priority may be determined by indication information sent by the first network device. The indication information is configured to determine the target set of random access resources from the plurality of first sets of random access resources.

The priority may be configured for the terminal by the first network device through the indication information. The first network device includes but is not limited to a base station, a core network device, etc.

For example, the priority may be an NSAG priority in an existing mechanism, configured by the network device such as a base station or a core network device, and may include an equal NSAG priority.

For example, the priority may also be an additional priority configured by the first network device for the NSAG, which is different from the NSAG priority in the existing mechanism mentioned above. The additional priority may or may not include an equal NSAG priority, which is not limited in the disclosure.

For example, the priority may also be a priority of a set of random access resources.

In another example, among the plurality of first sets of random access resources, the terminal may determine the first set of random access resources associated with a largest number of NSAGs and associated only with the first NSAG as the target set of random access resources.

In another example, among the plurality of first sets of random access resources, the terminal may determine the first set of random access resources associated only with the first NSAG and associated with an NSAG whose priority satisfies the preset condition as the target set of random access resources.

In another example, among the plurality of first sets of random access resources, the terminal may determine the first set of random access resources associated with a largest number of NSAGs, associated only with the first NSAG, and associated with an NSAG whose priority satisfies the preset condition as the target set of random access resources.

In a possible implementation, the target set of random access resources may be determined from the plurality of first sets of random access resources based on a terminal policy.

The terminal policy may be a policy formulated by the terminal based on its own service that can be used for determining one target set of random access resources from the plurality of first sets of random access resources. The specific terminal policy is not limited in the disclosure.

For example, the terminal policy may be random selection. Alternatively, the terminal policy may be selecting one with most random access resources, which is not limited in the disclosure.

In another possible implementation, the target set of random access resources may be determined from the plurality of first sets of random access resources based on the indication information sent by the first network device.

In an example, the indication information may be configured to configure priorities for the plurality of NSAGs.

For example, the priority may be an NSAG priority in an existing mechanism, configured by the network device such as a base station or a core network device, and may include an equal NSAG priority.

For example, the priority may also be an additional priority configured by the first network device for an NSAG, which is different from the NSAG priority in the existing mechanism mentioned above. The additional priority may or may not include an equal NSAG priority, which is not limited in the disclosure.

For example, the priority may also be a priority of a set of random access resources.

The terminal may select, based on the indication information, a first set of random access resources whose priority satisfies the preset condition from the plurality of first sets of random access resources as the target set of random access resources.

For example, the first NSAGs include the NSAG#1 and the NSAG#2. The random access resource set configuration broadcast by the first network device via a system message, for example, SIB1, includes: the set of random access resources #1 being associated with the NSAG#1; and the set of random access resources #2 being associated with the NSAG#2.

The terminal determines that the first sets of random access resources include the set of random access resources #1 and the set of random access resources #2.

The indication information sent by the first network device is used for configuring priorities for the NSAG#1 and the NSAG#2, in which a priority of the NSAG#1 is higher than a priority of the NSAG#2. Then the terminal determines the set of random access resources #1 as the target set of random access resources.

In another example, the indication information may be configured to instruct the terminal to determine the target set of random access resources based on the number of NSAGs associated with the set of random access resources.

The terminal may, among the plurality of first sets of random access resources, determine a first set of random access resources associated with a largest number of NSAGs as the target set of random access resources.

For example, the first NSAGs include the NSAG#1 and the NSAG#2. The random access resource set configuration broadcast by the first network device via a system message, for example, SIB1, includes: the set of random access resources #1 being associated with the NSAG#1; and the set of random access resources #2 being associated with the NSAG#1 and the NSAG#2.

The terminal determines that the first sets of random access resources include the set of random access resources #1 and the set of random access resources #2.

The terminal receives the indication information sent by the first network device. The indication information may be configured to instruct the terminal to determine the target set of random access resources based on the number of NSAGs associated with each set of random access resources. The terminal determines the set of random access resources #2 associated with a largest number of NSAGs as the target set of random access resources.

In another possible implementation, the target set of random access resources is determined from the plurality of first sets of random access resources based on a specification.

For example, the specification may specify that the terminal determines the target set of random access resources from the plurality of first sets of random access resources based on the number of associated NSAGs.

Alternatively, the specification may specify that the terminal determines the target set of random access resources based on the first set of random access resources associated only with the first NSAG.

Alternatively, the specification may specify that the terminal determines the target set of random access resources from the plurality of first sets of random access resources based on the priorities.

Alternatively, the specification may further specify that the terminal determines a set of random access resources with the smallest index value or the largest index value as the target set of random access resources.

Alternatively, the specification may specify that the terminal randomly selects one from the plurality of first sets of random access resources as the target set of random access resources.

The above are only exemplary illustrations. The specification may also specify other content. Manners in which the terminal determines the target set of random access resources based on the specification should all fall within the protection scope of the disclosure.

In another possible implementation, the target set of random access resources may be determined from the plurality of first sets of random access resources based on the terminal policy and the indication information sent by the first network device.

For example, the terminal determines, based on the indication information sent by the first network device, a plurality of sets of random access resources each of which may be used as the target set of random access resources from the plurality of first sets of random access resources. The terminal may further determine the target set of random access resources according to the terminal policy.

For example, the set of random access resources #1 is associated with the NSAG#1; the set of random access resources #2 is associated with the NSAG#1 and the NSAG#2.

The first sets of random access resources include the set of random access resources #1 and the set of random access resources #2. The indication information indicates priorities of the sets of random access resources. The terminal determines, based on the indication information, that each of the sets of random access resources #1 and the set of random access resources #2 may be used as the target set of random access resources.

The terminal may randomly select the set of random access resources #2 as the target set of random access resources based on the terminal policy.

In another possible implementation, the target set of random access resources may be determined from the plurality of first sets of random access resources based on the specification and the terminal policy.

The implementation is similar to the above embodiments and will not be repeated here.

In another possible implementation, the target set of random access resources may be determined from the plurality of first sets of random access resources based on the specification and the indication information sent by the first network device.

For example, the specification specifies that the terminal determines the target set of random access resources from the plurality of first sets of random access resources based on the indication information sent by the first network device.

In another possible implementation, the target set of random access resources may be determined from the plurality of first sets of random access resources based on the terminal policy, the specification, and the indication information sent by the first network device.

The above are only exemplary illustrations. In practical applications, manners in which the terminal uniquely determines the target set of random access resources from the plurality of first sets of random access resources should fall within the protection scope of the disclosure.

In the above embodiments, in a random access procedure triggered based on the network slice, the terminal may determine one first set of random access resources, thereby improving reliability of the random access procedure triggered based on network slice.

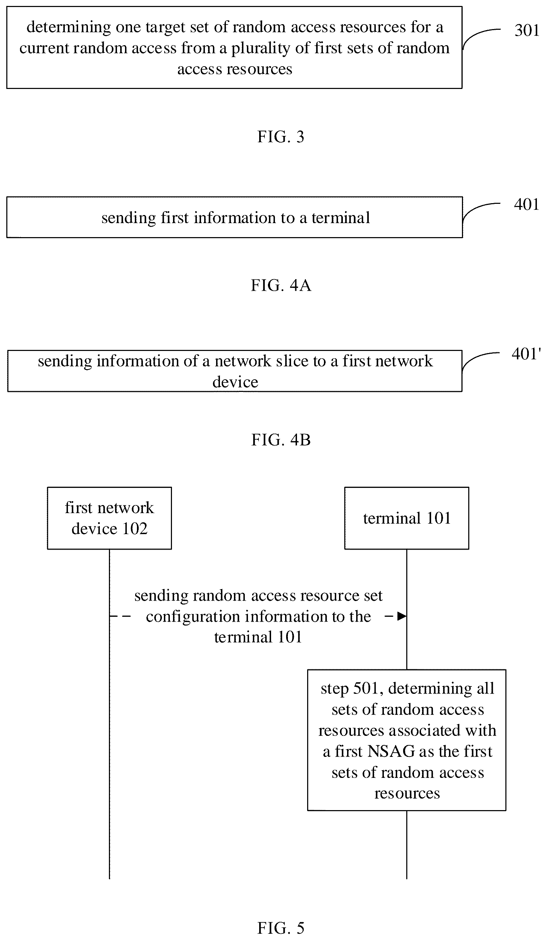

In some alternative embodiments, as shown in FIG. 3, FIG. 3 is a flow chart illustrating a method for determining a random access resource according to an embodiment. The method may be performed by a terminal and may include the following step 301.

At step 301, one target set of random access resources for a current random access is determined from a plurality of first sets of random access resources.

In an embodiment of the disclosure, the terminal may determine the first set of random access resources based on the related art.

For example, it is assumed that a first NSAG provided by an RRC layer to a MAC layer is NSAG1, and the feature triggering a random access procedure includes NSAG#1 and CE.

The random access resource set configuration broadcast by the network device via a system message, for example, SIB1, includes: a set of random access resources #1 being associated with the NSAG#1; and a set of random access resources #2 being associated with the NSAG#1 and the NSAG#2.

The terminal determines that the first sets of random access resources include the set of random access resources #1 and the set of random access resources #2.

For example, it is assumed that the first NSAGs determined by the RRC layer and provided to the MAC layer include the NSAG#1 and the NSAG#2, and the feature triggering the random access includes the NSAG#1 and the NSAG#2, and the NSAG#1 and the NSAG#2 have the same NSAG priority. The random access resource set configuration broadcast by the network device via a system message, for example, SIB1, includes: the set of random access resources #1 being associated with the NSAG#1; the set of random access resources #2 being associated with the NSAG#2.

The terminal determines that the first sets of random access resources include the set of random access resources #1 and the set of random access resources #2.

When the terminal determines the plurality of first sets of random access resources, the terminal may determine the target set of random access resources in the following manners.

In an embodiment of the disclosure, the target set of random access resources finally determined by the terminal may satisfy at least one of: the target set of random access resources being associated with a largest number of NSAGs; the target set of random access resources being associated only with a first NSAG, in which the first NSAG includes one or more NSAGs determined by the RRC layer and provided to the MAC layer; or a priority of an NSAG associated with the target set of random access resources satisfying a preset condition.

In an example, among the plurality of first sets of random access resources, the terminal may determine the first set of random access resources associated with the largest number of NSAGs as the target set of random access resources.

In another example, among the plurality of first sets of random access resources, the terminal may determine the first set of random access resources associated only with the first NSAG as the target set of random access resources.

There may be one or more first NSAGs, and the first NSAG(s) may include one or more NSAGs determined by the RRC layer and provided to the MAC layer.

In another example, among the plurality of first sets of random access resources, the terminal may determine the first set of random access resources as the target set of random access resources, in which a priority of an NSAG associated with the first set of random access resources satisfies the preset condition.

The preset condition here may be that a priority corresponding to the first set of random access resources is higher than priorities corresponding to other first sets of random access resources.

The priority may be determined by indication information sent by the first network device. The indication information is configured to determine the target set of random access resources from the plurality of first sets of random access resources.

The priority may be configured for the terminal by the first network device through the indication information. The first network device includes but is not limited to a base station, a core network device, etc.

For example, the priority may be an NSAG priority in an existing mechanism, configured by the network device such as a base station or a core network device, and may include an equal NSAG priority.

For example, the priority may also be an additional priority configured by the first network device for the NSAG, which is different from the NSAG priority in the existing mechanism mentioned above. The additional priority may or may not include an equal NSAG priority, which is not limited in the disclosure.

For example, the priority may also be a priority of a set of random access resources.

In another example, among the plurality of first sets of random access resources, the terminal may determine the first set of random access resources associated with the largest number of NSAGs and associated only with the first NSAG as the target set of random access resources.

In another example, among the plurality of first sets of random access resources, the terminal may determine the first set of random access resources associated only with the first NSAG and associated with an NSAG whose priority satisfies the preset condition as the target set of random access resources.

In another example, among the plurality of first sets of random access resources, the terminal may determine the first set of random access resources associated with the largest number of NSAGs, associated only with the first NSAG, and associated with an NSAG whose priority satisfies the preset condition as the target set of random access resources.

In a possible implementation, the target set of random access resources may be determined from the plurality of first sets of random access resources based on a terminal policy.

The terminal policy may be a policy formulated by the terminal based on its own service that can be used for determining one target set of random access resources from the plurality of first sets of random access resources. The specific terminal policy is not limited in the disclosure.

For example, the terminal policy may be random selection. Alternatively, the terminal policy may be selecting one with most random access resources, which is not limited in the disclosure.

In another possible implementation, the target set of random access resources may be determined from the plurality of first sets of random access resources based on indication information sent by the first network device.

In an example, the indication information may be configured to configure priorities for a plurality of NSAGs.

For example, the priority may be an NSAG priority in an existing mechanism, configured by the network device such as a base station or a core network device, and may include an equal NSAG priority.

For example, the priority may also be an additional priority configured by the first network device for an NSAG, which is different from the NSAG priority in the existing mechanism mentioned above. The additional priority may or may not include an equal NSAG priority, which is not limited in the disclosure.

For example, the priority may also be a priority of a set of random access resources.

The terminal may select, based on the indication information, a first set of random access resources whose priority satisfies the preset condition from the plurality of first sets of random access resources as the target set of random access resources.

For example, the first NSAGs include the NSAG#1 and the NSAG#2. The random access resource set configuration broadcast by the first network device via a system message, for example, SIB1, includes: the set of random access resources #1 being associated with the NSAG#1; and the set of random access resources #2 being associated with the NSAG#2.

The terminal determines that the first sets of random access resources include the set of random access resources #1 and the set of random access resources #2.

The indication information sent by the first network device is used for configuring priorities for the NSAG#1 and the NSAG#2, in which a priority of the NSAG#1 is higher than a priority of the NSAG#2. Then the terminal determines the set of random access resources #1 as the target set of random access resources.

In another example, the indication information may be configured to instruct the terminal to determine the target set of random access resources based on the number of NSAGs associated with each set of random access resources.

The terminal may determine, among the plurality of first sets of random access resources, a first set of random access resources associated with a largest number of NSAGs as the target set of random access resources.

For example, the first NSAGs include the NSAG#1 and the NSAG#2. The random access resource set configuration broadcast by the first network device via a system message, for example, SIB1, includes: the set of random access resources #1 being associated with the NSAG#1; and the set of random access resources #2 being associated with the NSAG#1 and the NSAG#2.

The terminal determines that the first sets of random access resources include the set of random access resources #1 and the set of random access resources #2.

The terminal receives the indication information sent by the first network device. The indication information may be configured to instruct the terminal to determine the target set of random access resources based on the number of NSAGs associated with each set of random access resources. The terminal determines the set of random access resources #2 associated with the largest number of NSAGs as the target set of random access resources.

In another possible implementation, the target set of random access resources is determined from the plurality of first sets of random access resources based on a specification.

For example, the specification may specify that the terminal determines the target set of random access resources from the plurality of first sets of random access resources based on the number of associated NSAGs.

Alternatively, the specification may specify that the terminal determines the target set of random access resources based on the first set of random access resources associated only with the first NSAG.

Alternatively, the specification may specify that the terminal determines the target set of random access resources from the plurality of first sets of random access resources based on the priorities.

Alternatively, the specification may further specify that the terminal determines a set of random access resources with the smallest index value or the largest index value as the target set of random access resources.

Alternatively, the specification may specify that the terminal randomly selects one from the plurality of first sets of random access resources as the target set of random access resources.

The above are only exemplary illustrations. The specification may also specify other content. Manners in which the terminal determines the target set of random access resources based on the specification should all fall within the protection scope of the disclosure.

In another possible implementation, the target set of random access resources may be determined from the plurality of first sets of random access resources based on the terminal policy and the indication information sent by the first network device.

For example, the terminal determines, based on the indication information sent by the first network device, a plurality of sets of random access resources each of which may be used as the target set of random access resources from the plurality of first sets of random access resources. The terminal may further determine the target set of random access resources according to the terminal policy.

For example, the set of random access resources #1 is associated with the NSAG#1; the set of random access resources #2 is associated with the NSAG#1 and the NSAG#2.

The first sets of random access resources include the set of random access resources #1 and the set of random access resources #2. The indication information indicates priorities of the sets of random access resources. The terminal determines, based on the indication information, that each of the set of random access resources #1 and the set of random access resources #2 may be used as the target set of random access resources.

The terminal may randomly select the set of random access resources #2 as the target set of random access resources based on the terminal policy.

In another possible implementation, the target set of random access resources may be determined from the plurality of first sets of random access resources based on the specification and the terminal policy.

The implementation is similar to the above embodiments and will not be repeated here.

In another possible implementation, the target set of random access resources may be determined from the plurality of first sets of random access resources based on the specification and the indication information sent by the first network device.

For example, the specification specifies that the terminal determines the target set of random access resources from the plurality of first sets of random access resources based on the indication information sent by the first network device.

In another possible implementation, the target set of random access resources may be determined from the plurality of first sets of random access resources based on the terminal policy, the specification, and the indication information sent by the first network device.

The above are only exemplary illustrations. In practical applications, manners in which the terminal uniquely determines the target set of random access resources from the plurality of first sets of random access resources should fall within the protection scope of the disclosure.

In the above embodiments, the terminal may determine one target set of random access resources suitable for the random access among the plurality of first sets of random access resources, thereby improving reliability of the random access procedure triggered based on the network slice.

The following introduces the method for determining a random access resource provided in the disclosure from the first network device side.

Embodiments of the disclosure provide a method for determining a random access resource. As shown in FIG. 4A, FIG. 4A is a flow chart illustrating a method for determining a random access resource according to an embodiment. The method may be performed by a first network device. The first network device includes but is not limited to a base station, an access network device, etc. The base station may be a 4G base station, a 5G base station or a future 6G base station, and the access network device may be a 4G access network device, a 5G access network device or a future 6G access network device, which is not limited in the disclosure. Optionally, the first network device may further include a core network device. The method may include the following step 401.

At step 401, first information is sent to a terminal.

In a possible implementation, the first information may be configured for the terminal to determine one first set of random access resources.

The first information may include random access resource set configuration information. The random access resource set configuration information is configured for the terminal to determine the first set of random access resources.

In an example, the random access resource set configuration information is associated with a single NSAG. That is, each set of random access resources configured by the random access resource set configuration information is associated with a single NSAG.

In another example, the random access resource set configuration information is associated with a plurality of NSAGs.

The plurality of NSAGs are not determined by an RRC layer of the terminal and provided to a MAC layer at the same time.

In an embodiment of the disclosure, the first network device may receive information of a network slice sent by a second network device and then determine a plurality of NSAGs that are not simultaneously included in the first NSAG based on the information of the network slice.

The information of the network slice is configured for the first network device to determine the plurality of NSAGs that are not simultaneously included in the first NSAG.

The second network device includes but is not limited to a base station, an access network device, etc. The base station may be a 4G base station, a 5G base station or a future 6G base station, and the access network device may be a 4G access network device, a 5G access network device or a future 6G access network device, which is not limited in the disclosure. Optionally, the second network device 103 may further include a core network device.

In an example, types of the first network device and the second network device may be the same or different.

For example, the first network device may be a base station, and the second network device may also be a base station. These two base stations may be the same or different, which is not limited in the disclosure.

For example, the first network device may be a core network device, and the second network device may be a base station.

For example, the first network device may be a base station, and the second network device may be a core network device.

For example, the first network device may be a core network device, and the second network device may be a core network device. These two core network devices may be core network devices of the same type or different types, which is not limited in the disclosure.

Further, when the first network device and the second network device are network devices of the same type, the first network device and the second network device may be the same device or different devices. When the first network device and the second network device are the same device, for example, the information of the network slice may be sent by the RRC layer of the network device to the MAC layer.

Optionally, the information of the network slice includes but is not limited to at least one of: a mapping relationship between S-NSSAI and an NSAG; an NSAG priority; or area information corresponding to the mapping relationship, in which the area information includes at least a TAI.

The network slice includes but is not limited to at least one of: a network slice that the terminal is allowed to access an NSAG; or network slices that cannot be simultaneously allowed for registration and use. The NSAG here may be any NSAG, that is, the network slice includes a network slice that the terminal is allowed to access any NSAG.

The network slices that cannot be simultaneously allowed for registration and use refers to network slices that are not allowed to be simultaneously registered and used by the terminal as determined by the first network device within the same time period.

In another example, in the random access resource set configuration information, each NSAG is associated with only one set of random access resources.

Manners for determining the first set of random access resources based on the random access set configuration information on the terminal side are already described on the terminal side. For specific details, reference may be made to the above Method 2 for determining the first set of random access resources on the terminal side, which will not be repeated here.

If there is one first set of random access resources determined by the terminal, the terminal may directly determine the first set of random access resources as the target set of random access resources based on the related art.

If there are a plurality of first sets of random access resources determined by the terminal, the terminal may further determine the target set of random access resources from the plurality of first sets of random access resources. The determination manner is similar to step 202, which will not be repeated here.

In another possible implementation, the first information may include indication information, configured for the terminal to determine the target set of random access resources from the plurality of first sets of random access resources.

In an example, the indication information may be configured to configure priorities for a plurality of NSAGs.

For example, the priority may be an NSAG priority in an existing mechanism, configured by the network device such as a base station or a core network device, and may include an equal NSAG priority.

For example, the priority may also be an additional priority configured by the first network device for an NSAG, which is different from the NSAG priority in the existing mechanism mentioned above. The additional priority may or may not include an equal NSAG priority, which is not limited in the disclosure.

For example, the priority may also be a priority of a set of random access resources.

The terminal may select, based on the indication information sent by the first network device, a first set of random access resources whose priority satisfies a preset condition from the plurality of first sets of random access resources as the target set of random access resources.

The preset condition here may be that a priority corresponding to the first set of random access resources is higher than priorities corresponding to other first sets of random access resources.

In another example, the indication information may be configured to instruct the terminal to determine the target set of random access resources based on the number of NSAGs associated with each set of random access resources.

The terminal may determine one target set of random access resources from the plurality of first sets of random access resources based on the indication information.

Alternatively, the terminal may determine the target set of random access resources based on the specification together with the terminal policy. The specific manner is similar to the manner in which the terminal determines the target set of random access resources from the plurality of first sets of random access resources in step 301 above, and will not be repeated here.

In the above embodiments, the first network device may send the first information to the terminal. The first information is configured for the terminal to determine one first set of random access resources or to determine one target set of random access resources for a current random access from a plurality of first sets of random access resources. In a random access procedure triggered based on the network slice, the terminal may uniquely determine the target set of random access resources suitable for the random access, thereby improving reliability of the random access procedure triggered based on the network slice.

Embodiments of the disclosure provide a method for determining a random access resource. As shown in FIG. 4B, FIG. 4B is a flow chart illustrating a method for determining a random access resource according to an embodiment. The method may be performed by a second network device. The second network device includes but is not limited to a base station, an access network device, etc. The base station may be a 4G base station, a 5G base station or a future 6G base station, and the access network device may be a 4G access network device, a 5G access network device or a future 6G access network device, which is not limited in the disclosure. Optionally, the second network device may further include a core network device. The method may include the following step 401'.

At step 401', information of a network slice is sent to a first network device.

Optionally, the information of the network slice includes but is not limited to at least one of: a mapping relationship between S-NSSAI and an NSAG; an NSAG priority; or area information corresponding to the mapping relationship, in which the area information includes at least a TAI.

The network slice includes but is not limited to at least one of: a network slice that the terminal is allowed to access an NSAG; or network slices that cannot be simultaneously allowed for registration and use. The NSAG here may be any NSAG, that is, the network slice includes a network slice that the terminal is allowed to access any NSAG.

The network slices that cannot be simultaneously allowed for registration and use refers to network slices that are not allowed to be simultaneously registered and used by the terminal as determined by the first network device within the same time period.

The first network device may determine a plurality of NSAGs associated with one set of random access resources based on the information of the network slice.

The plurality of NSAGs refer to a plurality of NSAGs that are not determined by an RRC layer of the terminal and provided to a MAC layer at the same time.

In the above embodiments, the second network device may provide the information of the network slice to the first network device so that the first network device may determine the plurality of NSAGs associated with one set of random access resources, and then configure the random access resource set configuration information for the terminal. This is easy to implement and highly usable.

In some alternative embodiments, as shown in FIG. 5, FIG. 5 is a flow chart illustrating a method for determining a random access resource according to an embodiment, applicable to the system shown in FIG. 1. The method may be performed by a terminal 101 and may include the following step 501.

At step 501, the terminal 101 determines all sets of random access resources associated with a first NSAG as first sets of random access resources.

In an embodiment of the disclosure, the terminal may determine all sets of random access resources associated with a first NSAG as the first sets of random access resources based on random access resource configuration information sent by a first network device. This embodiment does not limit specific configuration content of the random access resource set configuration information sent by the first network device.

The first NSAG includes one or more NSAGs determined by an RRC layer and provided to a MAC layer.

If there is one first set of random access resources, the terminal may directly determine the first set of random access resources as a target set of random access resources based on the related art.

If there are a plurality of first sets of random access resources determined by the terminal, the terminal may further determine one target set of random access resources as described in step 202.

It should be noted that the terminal may first determine the set of random access resources associated with the first NSAG as a second set of random access resources based on manners of step 201-1 to step 201-2 (not shown in FIG. 5), and then determine a set of random access resources associated with a largest number of NSAGs among the first NSAGs from the second sets of random access resources as the first set of random access resources, which is not limited in the disclosure.

In the above embodiments, in a random access procedure triggered based on the network slice, the terminal may determine one first set of random access resources, thereby improving reliability of the random access procedure triggered based on the network slice.

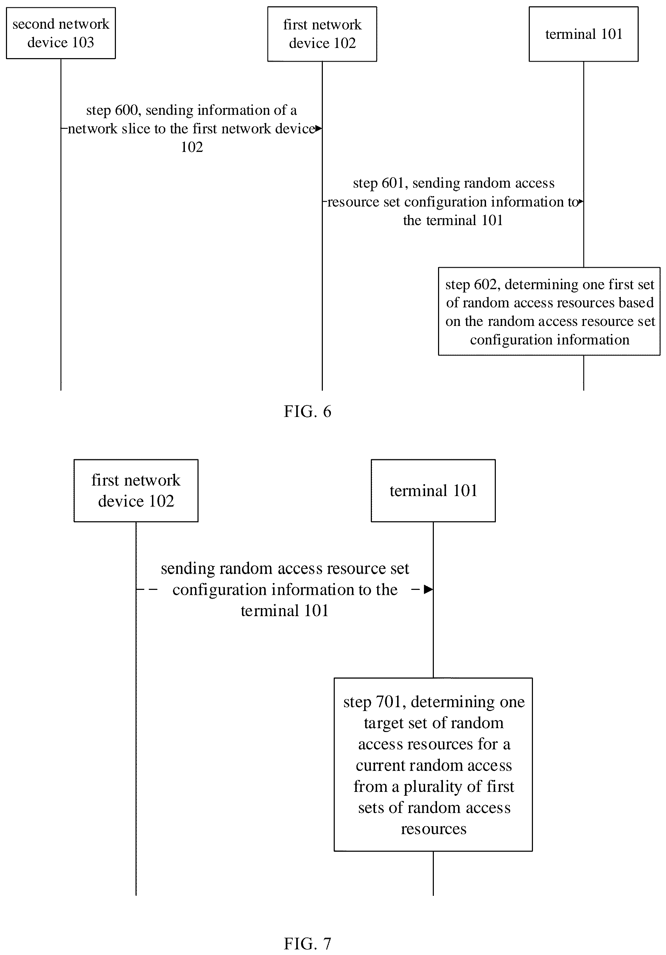

In some alternative embodiments, as shown in FIG. 6, FIG. 6 is a flow chart illustrating a method for determining a random access resource according to an embodiment. The method may be applied to the system shown in FIG. 1, including the following steps 600 to 602.

At step 600, a second network device 103 sends information of a network slice to a first network device 102.

Optionally, the information of the network slice includes but is not limited to at least one of: a mapping relationship between S-NSSAI and an NSAG; an NSAG priority; or area information corresponding to the mapping relationship, in which the area information includes at least a TAI.

The network slice includes but is not limited to at least one of: a network slice that a terminal is allowed to access an NSAG; or network slices that cannot be simultaneously allowed for registration and use. The NSAG here may be any NSAG, that is, the network slice includes a network slice that the terminal is allowed to access any NSAG.

The network slices that cannot be simultaneously allowed for registration and use refers to network slices that are not allowed to be simultaneously registered and used by the terminal as determined by the first network device within the same time period.

The first network device may determine, based on the information of the network slice, a plurality of NSAGs that are not simultaneously included in the first NSAG.

The first NSAG includes one or more NSAGs determined by an RRC layer of the terminal and provided to a MAC layer.

It should be noted that step 600 is optional, that is, if the random access resource set configuration information configured by the first network device 102 for the terminal 101 subsequently is unrelated to the plurality of NSAGs described above, then step 600 may not be executed.

At step 601, the first network device 102 sends the random access resource set configuration information to a terminal 101.

In an embodiment of the disclosure, the random access resource set configuration information may satisfy at least one of: one set of random access resources being associated with a single NSAG; one set of random access resources being associated with a plurality of NSAGs, in which the plurality of NSAGs are not determined by an RRC layer and provided to a MAC layer at the same time; or each NSAG being associated with one set of random access resources.

Specific content of the random access resource set configuration information has been introduced in step 401 and will not be repeated here.

At step 602, the terminal 101 determines a first set of random access resources based on the random access resource set configuration information.

Since the random access resource set configuration information is defined to satisfy at least one of the above conditions, the terminal may determine the first set of random access resources based on the random access resource set configuration information. The determination manner is similar to the above Method 2 in step 201 and will not be repeated here.

If there is one first set of random access resources, the terminal may directly determine the first set of random access resources as a target set of random access resources based on the related art.

If there are a plurality of first sets of random access resources determined by the terminal, the terminal may further determine one target set of random access resources as described in step 202.

In the above embodiments, starting from the first network device side, the set of random access resources configured by the first network device satisfies specified conditions, thus ensuring that the terminal determines one first set of random access resources and improving reliability of the random access procedure triggered based on the network slice.

In some alternative embodiments, as shown in FIG. 7, FIG. 7 is a flow chart illustrating a method for determining a random access resource according to an embodiment. The method may be applied to the system shown in FIG. 1. The method may be performed by a terminal 101, including the following step 701.

At step 701, the terminal 101 determines one target set of random access resources for a current random access from a plurality of first sets of random access resources.

In an embodiment of the disclosure, the terminal 101 may determine the first set of random access resources using the Method 1, the Method 2, or the Method 3 described above. If there are a plurality of first sets of random access resources, in a possible implementation, the terminal may determine the target set of random access resources from the plurality of first sets of random access resources based on at least one of a terminal policy, a specification, or indication information sent by a network.

The specific determination manner is similar to step 202 or step 301 above and will not be repeated here.

In an example, among the plurality of first sets of random access resources, the terminal may select one as the target set of random access resources suitable for the random access based on the terminal policy.

The terminal policy may be random selection.

In an example, among the plurality of first sets of random access resources, the terminal may determine the target set of random access resources based on the indication information sent by the first network device.

Optionally, the indication information is configured to instruct the terminal to determine the target set of random access resources based on the number of NSAGs associated with each set of random access resources.

In this case, if there are still a plurality of first sets of random access resources associated with the largest number of NSAGs, the terminal may further determine one first set of random access resources as the target set of random access resources based on the specification and/or the terminal policy.

For example, one of the plurality of first sets of random access resources may be randomly selected as the target set of random access resources based on the terminal policy.

For another example, a set of random access resources with a smallest index value may be determined as the target set of random access resources based on the specification.

For another example, a set of random access resources including most random access resources among the plurality of first sets of random access resources may be determined as the target set of random access resources based on the specification and the terminal policy.

In the above embodiments, in a random access procedure triggered based on the network slice, the terminal may determine one target set of random access resources suitable for the random access, thereby improving reliability of the random access procedure triggered with the network slice.

Corresponding to the method embodiments for implementing application functions described above, the disclosure also provides embodiments of apparatuses for implementing application functions.

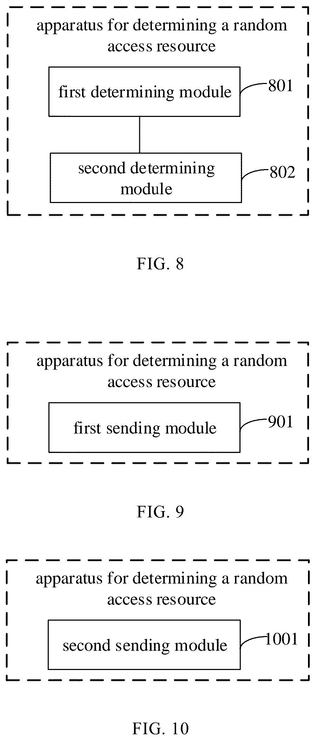

Referring to FIG. 8, FIG. 8 is a block diagram illustrating an apparatus for determining a random access resource according to an embodiment. The apparatus is applied to a terminal and includes a first determining module 801 and a second determining module 802.

The first determining module 801 is configured to determine a first set of random access resources, in which the first set of random access resources includes one or more sets of random access resources.

The second determining module 802 is configured to determine one target set of random access resources for a current random access from the first set of random access resources.

Referring to FIG. 9, FIG. 9 is a block diagram illustrating an apparatus for determining a random access resource according to an embodiment. The apparatus is applied to a first network device and includes a first sending module 901.

The first sending module 901 is configured to send first information to a terminal, in which the first information is configured for the terminal to determine one first set of random access resources or to determine one target set of random access resources for a current random access from a plurality of first sets of random access resources.

Referring to FIG. 10, FIG. 10 is a block diagram illustrating an apparatus for determining a random access resource according to an embodiment. The apparatus is applied to a second network device and includes a second sending module 1001.

The second sending module 1001 is configured to send information of a network slice to a first network device, in which the information of the network slice is configured for the first network device to determine a plurality of NSAGs associated with one set of random access resources, the plurality of NSAGs are not determined by an RRC layer of a terminal and provided to a MAC layer at the same time.

For the apparatus embodiments, since the apparatus embodiments basically correspond to the method embodiments, with respect to the relevant parts reference may be made to the description of the method embodiments. The apparatus embodiments described above are merely illustrative. The above units described as separate parts may or may not be physically separated, the parts shown as units may or may not be physical units, which may be located in one place, or may be distributed to a plurality of network units. Some or all units may be selected according to the actual requirements to achieve the purpose of the disclosure. Those skilled in the art may understand and implement these without creative effort.

Accordingly, the disclosure also provides a computer-readable storage medium. The computer-readable storage medium has stored a computer program that implements any method for determining a random access resource on the terminal side.

Accordingly, the disclosure also provides a computer-readable storage medium. The computer-readable storage medium has stored a computer program that implements any method for determining a random access resource on the first network device side or on the second network device side.

Accordingly, the disclosure also provides an apparatus for determining a random access resource. The apparatus for determining a random access resource includes: a processor; and a memory storing processor executable instructions, in which the processor is configured to implement any method for determining a random access resource on the terminal side.

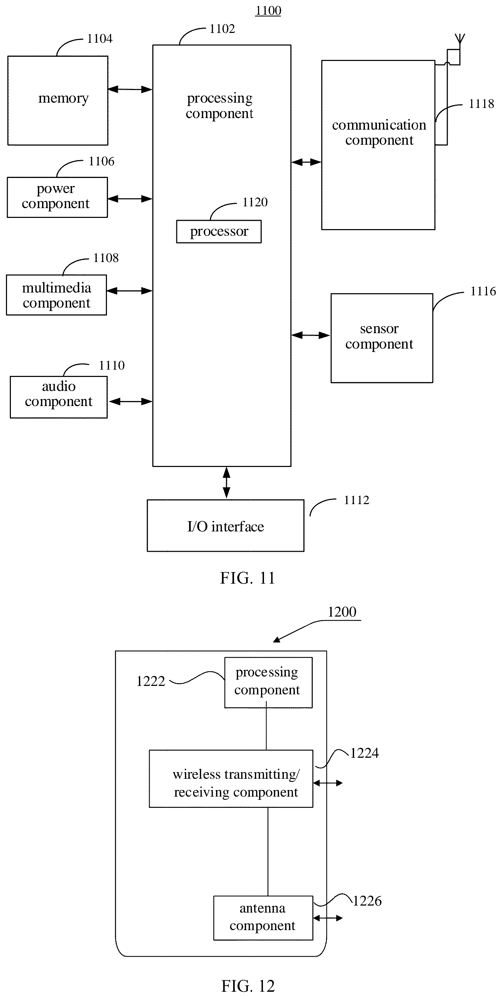

FIG. 11 is a block diagram illustrating an apparatus 1100 for determining a random access resource according to an embodiment. For example, the apparatus 1100 may be a mobile phone, a tablet computer, an e-book reader, a multimedia playback device, a wearable device, an in-vehicle user device, an iPad, a smart TV, or other terminals.

Referring to FIG. 11, the apparatus 1100 may include one or more of the following components: a processing component 1102, a memory 1104, a power supply component 1106, a multimedia component 1108, an audio component 1110, an inputs/outputs (I/O) interface 1112, a sensor component 1116, and a communication component 1118.

The processing component 1102 generally controls the overall operation of the apparatus 1100, such as operations associated with displays, telephone calls, random access data, camera operations, and recording operations. The processing component 1102 may include one or more processors 1120 to execute instructions to accomplish all or some of the steps of the method described above. Alternatively, the processing component 1102 may include one or more modules to facilitate interaction between the processing component 1102 and other components. For example, the processing component 1102 may include a multimedia module to facilitate interaction between the multimedia component 1108 and the processing component 1102. Alternatively, the processing component 1102 may read executable instructions from the memory to implement the steps of the method provided in the above embodiments.

The memory 1104 is configured to store various types of data to support operation at the apparatus 1100. Examples of such data include instructions for any application or method operated on the apparatus 1100, contact data, phone book data, messages, pictures, videos, etc. The memory 1104 may be implemented by any type of volatile or non-volatile storage device or their combination, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a disk or CD-ROM.

The power supply component 1106 provides power to the various components of the apparatus 1100. The power supply component 1106 may include a power management system, one or more power supplies, and other components associated with generating, managing, and distributing power for the apparatus 1100.

The multimedia component 1108 includes a screen providing an output interface between the apparatus 1100 and a user. In some embodiments, the multimedia component 1108 includes a front-facing camera and/or a rear-facing camera. The front camera and/or the rear camera may receive external multimedia data when the apparatus 1100 is in an operating mode, such as a shooting mode or a video mode. Each of the front camera or the rear camera may be a fixed optical lens system or have a focal length and optical zoom capability.

The audio component 1110 is configured to output and/or input audio signals. For example, the audio component 1110 includes a microphone (MIC) that is configured to receive external audio signals when the device 1100 is in an operational mode, such as a call mode, a recording mode, and a voice recognition mode. The received audio signals may be further stored in the memory 1104 or sent in the communication component 1118. In some embodiments, the audio component 1110 further includes a speaker for outputting audio signals.

The I/O interface 1112 provides an interface between the processing component 1102 and a peripheral interface module, said peripheral interface module may be a keypad, a click wheel, buttons, etc. These buttons may include, but are not limited to: a home button, a volume button, a start button, and a lock button.

The sensor component 1116 includes one or more sensors for providing various aspects of status assessment for the apparatus 1100. For example, the sensor component 1116 may detect an open/closed state of the apparatus 1100, the relative positioning of components, such as the components being the display and keypad of the apparatus 1100, the sensor component 1116 may also detect a change in the position of the apparatus 1100 or one of the components of the apparatus 1100, the presence or absence of user contact with the apparatus 1100, the orientation of the apparatus 1100 or acceleration/deceleration of the apparatus 1100, and the temperature change of the apparatus 1100. The sensor component 1116 may include a proximity sensor configured to detect the presence of a nearby object in the absence of any physical contact. The sensor component 1116 may also include an optical sensor, such as a CMOS or CCD image sensor, for use in imaging applications. In some embodiments, the sensor component 1116 may also include an acceleration sensor, a gyroscope sensor, a magnetic sensor, a pressure sensor, or a temperature sensor.

The communication component 1118 is configured to facilitate communication between the apparatus 1100 and other devices by wired or wireless means. The apparatus 1100 may access a wireless network based on a communication standard, such as Wi-Fi, 2G, 3G, 4G, 5G, or 6G, or their combination. In an exemplary embodiment, the communication component 1118 receives broadcast signals or broadcast-related information from an external broadcast management system in a broadcast channel. In an exemplary embodiment, the communication component 1118 further includes a near field communication (NFC) module to facilitate short-range communication. For example, in the NFC module may be implemented based on radio frequency identification (RFID) technology, infrared data association (IrDA) technology, ultra wide band (UWB) technology, Bluetooth (BT) technology, and other technologies.

In exemplary embodiments, the apparatus 1100 may be implemented by one or more application-specific integrated circuits (ASIC), digital signal processors (DSP), digital signal processing devices (DSPD), programmable logic devices (PLD), field-programmable gate arrays (FPGA), controllers, microcontrollers, microprocessors, or other electronic components for implementing the methods performed by the terminal described above.

In exemplary embodiments, a non-transitory machine-readable storage medium including instructions is also provided, such as the memory 1104 including the instructions. The instructions may be executed by the processor 1120 of the apparatus 1100 to perform the method described above. For example, the non-transitory computer-readable storage medium may be a ROM, a random access memory (RAM), a CD-ROM, a tape, a floppy disk, and an optical data storage device, etc.

Accordingly, the disclosure also provides an apparatus for determining a random access resource. The device for determining a random access resource includes: a processor; and a memory storing processor executable instructions, in which the processor is configured to implement any method for determining a random access resource on the first network device side or on the second network device side.

Referring to FIG. 12, FIG. 12 is a block diagram illustrating an apparatus 1200 for determining a random access resource according to an exemplary embodiment. The apparatus 1200 may be provided as a first network device. Referring to FIG. 12, the apparatus 1200 includes a processing component 1222, a wireless transmitting/receiving component 1224, an antenna component 1226, and a signal processing portion specific to a wireless interface, and the processing component 1222 may further include at least one processor.

One of processors in the processing component 1222 may be configured for performing any method for determining a random access resource described above.

Other implementations of the embodiments of the disclosure will be readily apparent to those skilled in the art from consideration of the specification and practice of the disclosure disclosed herein. This disclosure is intended to cover any modification, use or adaptation of the embodiments of the disclosure, these modifications, uses or adaptations follow the general principles of the embodiments of the disclosure and include those in the technical field not disclosed by the embodiments of the disclosure common knowledge or common technical means. The specification and examples are to be considered exemplary only, with a true scope and spirit of the embodiments of the disclosure being indicated by the following claims.

It should be understood that the embodiments of the disclosure are not limited to the precise structures described above and shown in the figures, and various modifications and changes can be made without departing from the scope thereof. The scope of embodiments of the disclosure is limited only by the appended claims.

## Claims

1. A method for determining a random access resource, performed by a terminal, comprising:
determining a first set of random access resources, wherein the first set of random access resources comprises one or more sets of random access resource; and
determining one target set of random access resources for a current random access from the first set of random access resources.

2. The method according to claim 1, wherein determining the first set of random access resources comprises:
determining a set of random access resources associated with a first network slice access stratum group (NSAG) as the first set of random access resources, wherein the first NSAG comprises one or more NSAGs determined by a radio resource control (RRC) layer and provided to a media access control (MAC) layer.

3. The method according to claim 1, wherein determining the first set of random access resources comprises:
determining the first set of random access resources based on random access resource set configuration information sent by a first network device,
wherein the random access resource set configuration information satisfies at least one of:
one set of random access resources being associated with one NSAG;
one set of random access resources being associated with more than one NSAG;
wherein more than one NSAG is not determined by an RRC layer and provided to a MAC layer at the same time; or
one NSAG being associated with one set of random access resources.

4. The method according to claim 1, the number of first sets of random access resources is plural, and determining the one target set of random access resources for the current random access from the first set of random access resources comprises at least one of:
determining the target set of random access resources from the first sets of random access resources based on a terminal policy;
determining the target set of random access resources from the first sets of random access resources based on indication information sent by a first network device; or
determining the target set of random access resources from the first sets of random access resources based on a specification.

5. The method according to claim 4, wherein the target set of random access resources satisfies at least one of:
the target set of random access resources being associated with a largest number of NSAGs;
the target set of random access resources being associated only with a first NSAG, wherein the first NSAG comprises one or more NSAGs determined by an RRC layer and provided to a MAC layer; or
a priority of an NSAG associated with the target set of random access resources satisfying a preset condition.

6. The method according to claim 5, further comprising:
determining the priority based on the priority and the indication information sent by the first network device, wherein the indication information is configured to determine the target set of random access resources from the first sets of random access resources.

7. A method for determining a random access resource, performed by a first network device, comprising:
sending first information to a terminal, wherein the first information is configured for the terminal to determine one first set of random access resources or to determine one target set of random access resources for a current random access from first sets of random access resources.

8. The method according to claim 7, wherein the first information comprises random access resource set configuration information, and the random access resource set configuration information is configured for the terminal to determine the first set of random access resources,
wherein the random access resource set configuration information satisfies at least one of:
one set of random access resources being associated with one network slice access stratum group (NSAG);
one set of random access resources being associated with more than one NSAG;
wherein the more than one NSAG is not determined by a radio resource control (RRC) layer and provided to a media access control (MAC) layer at the same time; or
one NSAG being associated with one set of random access resources.

9. The method according to claim 8, further comprising:
receiving information of a network slice sent by a second network device; and
determining the more than one NSAG based on the information of the network slice.

10. The method according to claim 9, wherein the information of the network slice comprises at least one of:
a mapping relationship between single network slice selection assistance information (S-NSSAI) and an NSAG;
an NSAG priority; or
area information corresponding to the mapping relationship, wherein the area information comprises at least a tracking area identity (TAI).

11. The method according to claim 9 or 10, wherein the network slice comprises at least one of:
a network slice that the terminal is allowed to access an NSAG; or
network slices that cannot be simultaneously allowed for registration and use.

12. The method according to claim 7, wherein the first information comprises indication information, and the indication information is configured for the terminal to determine the target set of random access resources from the first sets of random access resources.

13. A method for determining a random access resource, performed by a second network device, comprising:
sending information of a network slice to a first network device, wherein the information of the network slice is configured for the first network device to determine more than one network slice access stratum group (NSAG) associated with one set of random access resources, the more than one NSAG is not determined by a radio resource control (RRC) layer of a terminal and provided to a media access control (MAC) layer at the same time.

14. The method according to claim 13, wherein the information of the network slice comprises at least one of:
a mapping relationship between single network slice selection assistance information (S-NSSAI) and an NSAG;
an NSAG priority; or
area information corresponding to the mapping relationship, wherein the area information comprises at least a tracking area identity (TAI).

15. The method according to claim 13 or 14, wherein the network slice comprises at least one of:
a network slice that the terminal is allowed to access an NSAG; or
network slices that cannot be simultaneously allowed for registration and use.

16. An apparatus for determining a random access resource, applied to a terminal, comprising:
a first determining module, configured to determine a first set of random access resources, wherein the first set of random access resources comprises one or more sets of random access resources; and
a second determining module, configured to determine one target set of random access resources for a current random access from the first set of random access resources.

17. An apparatus for determining a random access resource, applied to a first network device of a base station, comprising:
a first sending module, configured to send first information to a terminal, wherein the first information is configured for the terminal to determine one first set of random access resources or to determine one target set of random access resources for a current random access from first sets of random access resources.

18. An apparatus for determining a random access resource, applied to a second network device of a base station, comprising:
a second sending module, configured to send information of a network slice to a first network device, wherein the information of the network slice is configured for the first network device to determine a plurality of network slice access stratum groups (NSAGs) associated with one set of random access resources, the plurality of NSAGs are not determined by a radio resource control (RRC) layer of a terminal and provided to a media access control (MAC) layer at the same time.

19. A computer-readable storage medium having stored a computer program that implements the method for determining a random access resource according to any one of claims 1 to 6.

20. A computer-readable storage medium having stored a computer program that implements the method for determining a random access resource according to any one of claims 7 to 12 or claims 13 to 15.

21. An apparatus for determining a random access resource, comprising:
a processor; and
a memory storing processor executable instructions;
wherein the processor is configured to implement the method for determining a random access resource according to any one of claims 1 to 6.

22. An apparatus for determining a random access resource, comprising:
a processor; and
a memory storing processor executable instructions;
wherein the processor is configured to implement the method for determining a random access resource according to any one of claims 7 to 12 or claims 13 to 15.
